# EUROPÄISCHE PATENTANMELDUNG

(11) **EP 4 756 238 A1**
(43) Veröffentlichungstag der Anmeldung: **10.06.2026**
(21) Anmeldenummer: 24217130.4
(22) Anmeldetag: 03.12.2024
(51) Int. Cl.: F16B 2/10

(54) **KLEMME**

(71) Anmelder: SINPROTEC GmbH, 78048 Villingen-Schwenningen (DE)
(72) Erfinder: Murello, Johannes, 78652 Deisslingen (DE); Borowski, Alexander, 78126 Königsfeld (DE)
(74) Vertreter: Mzb PartmbB

(57) **Zusammenfassung**

Klemmvorrichtung (10) zum Halten eines Objekts (18), umfassend:
a. ein Unterteil (20) mit einer ersten Zahnplatte (50), die mehrere erste Zähne (56) aufweist;
b. ein Oberteil (30) mit einer zweiten Zahnplatte (50), die mehrere zweite Zähne (56) aufweist, wobei das Oberteil (30) relativ zum Unterteil (20) um eine Drehachse (12) schwenkbar ist;
c. eine Rastplatte (26) mit einer Verzahnung;
d. einen im Oberteil (30) gelagerten Rastblock (38) mit mindestens einem Rastbolzen (42), der in die Verzahnung der Rastplatte (26) eingreift, um das Oberteil (30) relativ zum Unterteil (20) in verschiedenen Schließstellungen zu fixieren;
e. einen Boosterhebel (60), der mit dem Oberteil (30) gekoppelt ist und bei Betätigung eine zusätzliche Klemmkraft auf das Objekt (18) ausübt.

## Beschreibung

### Gebiet der Technik

Die vorliegende Erfindung betrifft eine mechanische Klemme, die zur Bergung von Verwundeten, Gefallenen oder Gegenständen eingesetzt werden kann.

### Stand der Technik

Die Klemme ist essenzieller Bestandteil eines Haken-und-Leinen-Satzes (HUL), der von Soldaten eingesetzt wird, um Objekte jeglicher Art zu bewegen und dabei die Gefahr für Leib und Leben des Bedieners zu minimieren. Ein HUL besteht aus einer Zusammenstellung verschiedener Befestigungselemente und Seile mit dem Grundgedanken, aus sicherer Distanz zu arbeiten, um einen bestimmten Gefahrenbereich bei einer möglichen Auslösung von Kampfmitteln zu meiden.

In Szenarien der Kampfmittelabwehr gelten bestimmte Grundsätze, die auf der Annahme und bestätigten Erfahrung beruhen, dass nahezu jedes Objekt manipuliert und mit versteckten Ladungen (englisch "booby traps") gesichert sein kann, bevor der Gegner die eigene Stellung einnimmt. Daher besagt eine Grundregel der Kampfmittelabwehr: "Hebe nichts auf, was du nicht selbst hingelegt hast." Weitere Prinzipien sind, Objekte nicht von Hand zu bewegen und Türen, Schubladen oder Schränke nicht manuell zu öffnen. Dies ist darauf zurückzuführen, dass Gegner Ladungen so anbringen, dass sie nicht sichtbar und schwer zu entschärfen sind, mit dem Ziel, bei Annäherung oder Manipulation auszulösen. Beispiele für solche versteckten Ladungen sind Handgranaten mit gezogenem Splint unter Leichen oder Objekten, Sprengladungen mit Mikroschaltern und Batterien, Antipersonenminen, die auf Entlastung reagieren, Splitter-Springminen mit Stolper- oder Zugdraht sowie gerichtete Minen wie Claymore oder MON-50 mit Zugdraht.

Je nach Befähigung des Bedieners kommen unterschiedliche HULs zum Einsatz. Mit steigender Qualifikation des Soldaten wird die Ausstattung des HUL umfangreicher und komplexer. Dennoch gibt es Bestandteile, die in jedem HUL vorhanden sind, da sie zur absoluten Grundausstattung gehören. Dazu zählen ein Seil von bestimmter Länge (mindestens 20 Meter, bis zu 400 Meter) als Zugseil aus der Deckung, Karabiner zum schnellen Befestigen von Werkzeugen oder Gegenständen, Tampen (Seilstücke mit Doppelöse), Haken in verschiedenen Ausführungen und Klemmen wie die Krokoklemme.

Der Hintergrund dieser Grundausstattung ist es, dem Soldaten die Möglichkeit zu geben, einfache Objekte aus der Distanz zu bewegen. Solche Objekte können Kisten, Geschosse, Müllsäcke, Schrott, Kabel, Leitungen, Leichen oder Sandsäcke und Deckungen sein. Diese Objekte kommen in nahezu jeder Situation vor, sei es in Stellungen, Gebäuden oder auf Freiflächen im Gelände.

Ein zentraler Grundsatz bei der Anwendung des HUL ist, dass das zu bewegende Objekt sich nicht oder nur minimal bewegt, um eine Auslösung einer versteckten Ladung zu vermeiden. Hierbei spielt die Krokoklemme als universelles Werkzeug eine entscheidende Rolle, da sie dem Bediener mehrere Vorteile bietet. Sie lässt sich schnell anbringen, der Zugpunkt verrutscht nicht, was insbesondere bei Kabeln, Seilen, Drähten und Leitungen wichtig ist, und die Anbringung verursacht keine oder nur minimale Bewegung des Objekts. Zudem können nahezu alle Geometrien und Materialien befestigt werden, und die Bedienung ist mit einer Hand möglich, was aufgrund eingeschränkter Beweglichkeit durch Bombenschutzanzug oder passive Schutzausstattung von Bedeutung ist.

Alternativen zur Krokoklemme, wie beispielsweise Haken beim Ziehen von Leichen, Sandsäcken oder Stoffen, bergen das Risiko des Herausrutschens. Dies stellt ein kritisches Szenario dar, da das Objekt undefiniert bewegt wurde, ohne es vollständig aus der Lage zu ziehen. Die versteckte Ladung kann in einen kritischen Zustand gebracht worden sein, sodass sie bei der nächsten Annäherung durch den Bediener ausgelöst wird. Das gleiche Problem besteht beim Einsatz eines Karabiners oder Hakens beim Ziehen eines Kabels.

Die genannten Vorteile der Krokoklemme erfordern eine technisch einwandfreie Umsetzung, um unerwünschte Szenarien beim Einsatz zu vermeiden. Dazu gehören das eigenständige Öffnen der Krokoklemme beim Ziehen, was zum Herausfallen des Objekts führt, eine zu geringe Kraftaufbringung, wodurch das Objekt herausrutschen kann, die Notwendigkeit, die Krokoklemme mit beiden Händen anzubringen, was die Gefahr einer unbeabsichtigten Bewegung des Objekts erhöht, sowie die Notwendigkeit, die Krokoklemme zum Fixieren zu verriegeln, was die Verweildauer am Objekt verlängert.

### Offenbarung der Erfindung

Die Erfindung wird in den beigefügten Ansprüchen dargelegt.

### Technische Aufgabe

Ein Problem besteht darin, dass die im Stand der Technik verfügbaren Klemmvorrichtungen den speziellen Anforderungen bei der Handhabung potenziell gefährlicher Objekte in Kampfmittelabwehrszenarien nicht gerecht werden. Insbesondere weisen die bisherigen Klemmen, wie beispielsweise Krokodilklemmen, mehrere entscheidende Nachteile auf, die die Sicherheit und Effizienz der Einsatzkräfte erheblich beeinträchtigen können.

Zum einen fehlt es den bekannten Klemmen an einer ausreichenden Haltekraft, um Objekte unter wechselnden oder erhöhten Zugkräften sicher und zuverlässig zu halten. Dies führt zu der Gefahr, dass das zu bergende Objekt während des Einsatzes aus der Klemme herausrutscht, was nicht nur den Verlust der Kontrolle über das Objekt zur Folge hat, sondern auch unkontrollierte Bewegungen verursachen kann, die versteckte Sprengladungen auslösen könnten.

Ein weiteres zentrales Problem ist das Fehlen einer automatischen Klemmkrafterhöhung in Abhängigkeit von der anliegenden Zugkraft. Die derzeitigen Klemmvorrichtungen gewährleisten nicht, dass die Klemmkraft proportional zur Zugkraft exponentiell steigt. Dadurch kann bei zunehmender Belastung die Effektivität der Klemmung abnehmen, was ein erhebliches Sicherheitsrisiko darstellt.

Darüber hinaus sind die bestehenden Klemmen oft nicht für eine einhändige Bedienung unter erschwerten Bedingungen ausgelegt. Insbesondere bei der Verwendung von schwerer Schutzausrüstung, wie beispielsweise einem Bombenschutzanzug, ist die Beweglichkeit des Operators stark eingeschränkt. Die Notwendigkeit, die Klemme mit beiden Händen zu bedienen oder zusätzliche Verriegelungsmechanismen zu betätigen, erhöht die Expositionszeit im Gefahrenbereich und somit das Risiko für den Anwender.

Ferner sind die verfügbaren Klemmen nicht ausreichend flexibel, um an unterschiedlichen Objektgeometrien und Materialien sicher eingesetzt zu werden. Dies betrifft insbesondere Objekte mit glatten oder unregelmäßigen Oberflächen, bei denen die Gefahr des Abrutschens besonders hoch ist.

Schließlich stellen Verschmutzungen und raue Umgebungsbedingungen weitere Herausforderungen dar, denen die bisherigen Klemmvorrichtungen nicht gewachsen sind. Die Empfindlichkeit gegenüber Schmutz und mechanischer Belastung kann die Funktionstüchtigkeit der Klemmen beeinträchtigen und damit die Sicherheit im Einsatz weiter vermindern.

### Technische Lösung

Wie aus der folgenden Beschreibung hervorgeht, wird dieses Problem gemäß dem kennzeichnenden Teil der unabhängigen Ansprüche gelöst.

### Vorteilhafte Wirkungen

Durch die besondere Gestaltung der Klemmvorrichtung ergeben sich im Vergleich zum bisherigen Stand der Technik erhebliche Vorteile. Sie gewährleistet eine zuverlässige und sichere Handhabung potenziell gefährlicher Objekte, da sie die Klemmkraft automatisch proportional zur anliegenden Zugkraft exponentiell erhöht. Dieses Merkmal verhindert effektiv ein Herausrutschen des Objekts, selbst bei steigenden oder wechselnden Belastungen, und minimiert somit das Risiko unkontrollierter Bewegungen, die zu gefährlichen Situationen führen könnten.

Die automatische Erhöhung der Klemmkraft beim Anlegen einer Zugkraft kann durch die besondere Gestaltung der Klemmvorrichtung in jeder Lage der an ein zu fixierendes Objekt angelegten Klemmvorrichtung - unabhängig vom Öffnungswinkel der Klemmvorrichtung - erfolgen.

Die Konstruktion ermöglicht zudem eine einhändige Bedienung, selbst unter erschwerten Bedingungen wie dem Tragen schwerer Schutzausrüstung. Dies erhöht die Effizienz und Sicherheit im Einsatz, da der Anwender weniger Zeit im Gefahrenbereich verbringen muss und seine Beweglichkeit nicht unnötig eingeschränkt wird. Die intuitive Handhabung reduziert die Komplexität der Operation und erlaubt es dem Anwender, sich auf die kritischen Aspekte des Einsatzes zu konzentrieren.

Ein weiterer Vorteil liegt in der Flexibilität der Klemmvorrichtung. Durch auswechselbare Zahnplatten kann sie an verschiedene Objektgeometrien und -materialien angepasst werden. Dies erweitert das Einsatzspektrum erheblich und stellt sicher, dass unterschiedlichste Objekte sicher und zuverlässig gehalten werden können. Die spezielle Anordnung der Zähne gewährleistet dabei einen festen Griff, selbst bei glatten oder unregelmäßigen Oberflächen.

Die robuste Mechanik der Klemmvorrichtung ist unempfindlich gegenüber Verschmutzungen und mechanischen Einwirkungen. Dies stellt einen zuverlässigen Betrieb auch in rauen Umgebungen sicher und erhöht die Einsatzbereitschaft unter schwierigen Bedingungen. Die Verriegelungsmechanismen sind so ausgelegt, dass sie selbst bei Verschleiß oder äußerer Einwirkung ihre Funktion behalten, was die Sicherheit und Langlebigkeit der Vorrichtung weiter steigert.

Insgesamt bietet die Klemmvorrichtung durch diese Eigenschaften im Vergleich zu den bekannten Lösungen deutliche Verbesserungen hinsichtlich Sicherheit, Zuverlässigkeit und Bedienbarkeit. Sie überwindet die bisherigen Einschränkungen und ermöglicht eine effiziente Durchführung von Einsätzen in potenziell gefährlichen Umgebungen, wobei sie das Risiko für den Anwender signifikant reduziert.

### Kurze Beschreibung der Zeichnungen

Fig. 1 zeigt in isometrischer Ansicht eine Klemme von vorne links und schräg oben.
Fig. 2 zeigt die in Fig.1 dargestellte Klemme mit herausgezogenem Absteckstift oben und abgenommener Zahnplatte.
Fig. 3a zeigt die in Fig. 2 dargestellte Anordnung in der Seitenansicht von links.
Fig. 3b zeigt einen Schnitt in der Ebene C-C gemäß Fig. 3a.
Fig. 4a zeigt eine Ansicht der Klemme aus Fig. 1 von unten.
Fig. 4b zeigt einen Schnitt in der Ebene A-A gemäß Fig. 4a.
Fig. 4c zeigt einen Schnitt in der Ebene E-E gemäß Fig. 4a.
Fig. 5 zeigt Detail F aus Fig. 4c.
Fig. 6 zeigt eine Ansicht der Klemme aus Fig. 1 von hinten.

### Beschreibung der Ausführungsarten

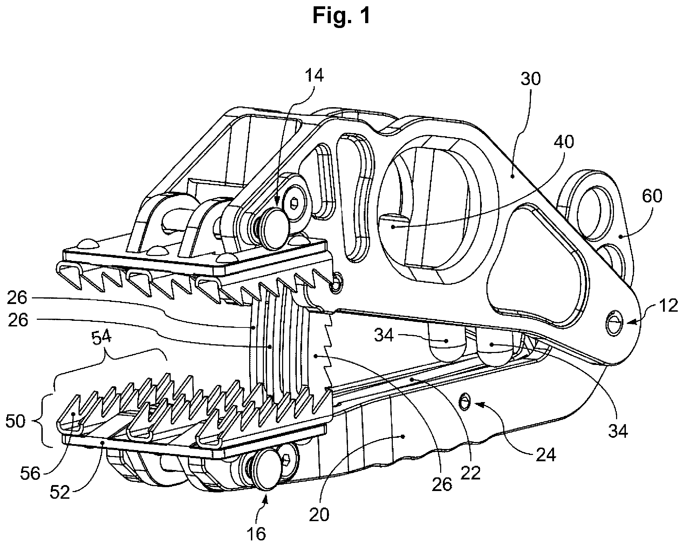

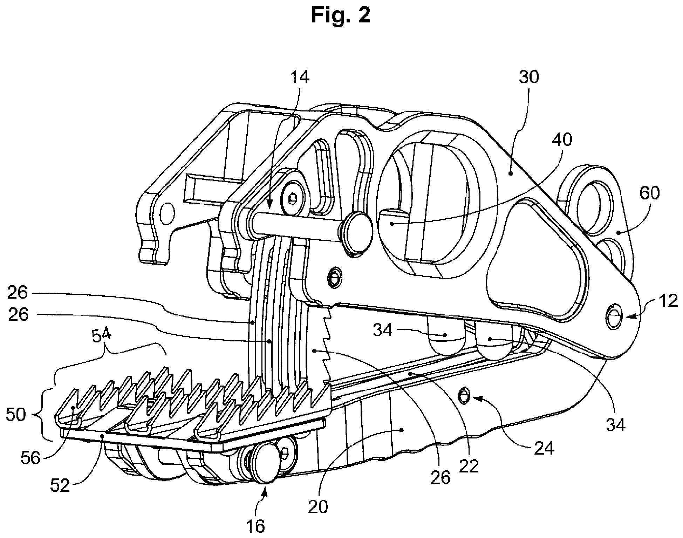

In den Figuren 1 und 2 wird eine Klemmvorrichtung (10) präsentiert, die in Figur 1 in einer isometrischen Ansicht von vorne links und schräg oben dargestellt ist. Diese Vorrichtung besteht aus einem Unterteil (20) und einem relativ dazu um eine Haupt- bzw. Drehachse (12) schwenkbaren Oberteil (30). An einem im Unterteil (20) über eine Hebelachse (24) gelagerten Übertragungshebel (22) sind eine Mehrzahl von Rastplatten (26) angebracht. Am vorderen Ende des Unterteils (20), sowie auch am vorderen Ende des Oberteils (30) ist jeweils eine Zahnplatte (50) angebracht, die mit Zahnleisten (54) und Zähnen (56) ausgestattet ist. Die Verbindung und Fixierung der Komponenten erfolgt über Absteckstifte (14, 16), die deutlich erkennbar sind. Zudem sind ein Entriegelungsbolzen (40) und ein Boosterhebel (60) eingebaut, wobei der Boosterhebel (60) über den Übertragungshebel (22), der um die Hebelachse (24) schwenkbar gelagert ist, mit dem System gekoppelt ist. Die Klemmvorrichtung (10) verfügt ferner über mindestens einen, bevorzugt zwei federbelastete Druckstifte (34), die zur Positionshaltung des Oberteils (30) in geöffneter Stellung beitragen. Diese Funktion kann alternativ auch beispielsweise durch den Einbau einer Drehfeder im Bereich der Drehachse (12) erreicht werden. In Figur 2 wird die gleiche Anordnung gezeigt, jedoch mit herausgezogenem oberen Absteckstift (14) und entfernter Zahnplatte (50), was einen detaillierten Blick auf die interne Struktur, insbesondere auf die Trägerplatte (52) sowie die spezifische Anordnung der Zahnleisten (54) und Zähne (56), ermöglicht.

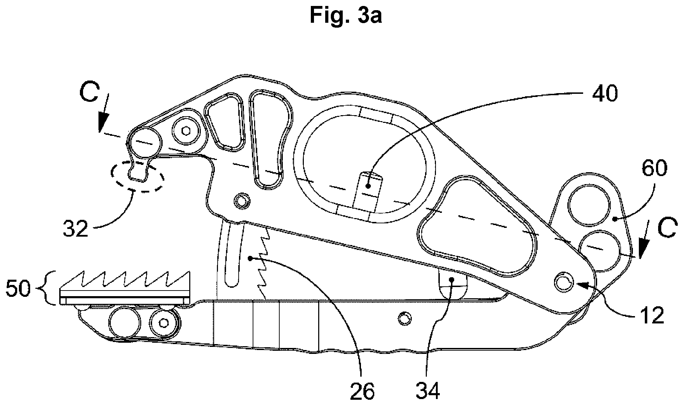

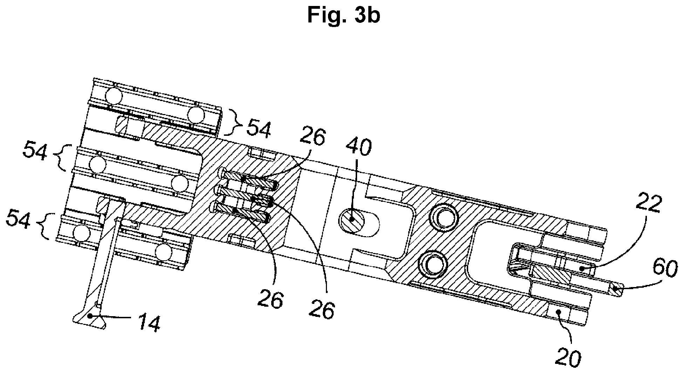

Das Zusammenfahren der Klemmvorrichtung (10) und damit das Fixieren der Klemmvorrichtung (10) an einem beliebigen Objekt (18) in der Schließstellung wird durch einfachen Druck auf das in der Handfläche des Operators liegende Oberteil (30) und Unterteil (20) der Klemmvorrichtung (10) entgegen der Federkraft (35) der Druckstifte (34) vorgenommen. Es müssen hierzu keinerlei weitere Bedienelemente betätigt werden. Die Entriegelung der Rastmechanik sei nunmehr anhand der Figuren 3a und 3b umrissen. Die Betätigung des hierzu im Oberteil (30) gelagerten Entriegelungsbolzens (40) gestattet hierbei das Schwenken des Oberteils (30) relativ zum Unterteil (20) um die Drehachse (12). Dies ermöglicht das Öffnen der Klemmvorrichtung (10). Zwei Stützzapfen stützen die Zahnplatte (50) dabei im Wesentlichen in oder sehr nahe an der Wirklinie des Kraftflusses zwischen Haltezähnen (56) und zu fixierendem Objekt (18) ab. Es versteht sich, dass eine vergleichbare Wirkung durch eine Kante und/oder einen Hinterschnitt, welche am Oberteil (30) angeformt sind, erreicht werden mögen.

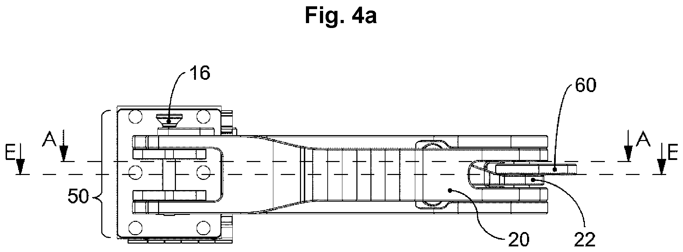

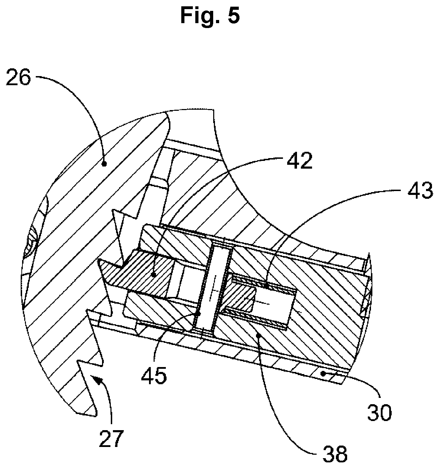

Anordnung und Funktion der Rastmechanik lassen sich in den Schnittebenen A-A und E-E gemäß den Figuren 4a bis 4c und Fig. 5 weiter verdeutlichen. Ein im Oberteil (30) gelagerter Rastblock (38) trägt mehrere Rastbolzen (42). Diese Rastbolzen (42) sind durch eine Druckfeder (43) vorgespannt und können in Höhenversatz angeordnet sein, um in korrespondierende Rastnuten (27) der Rastplatte (26) einzugreifen. Beim Schließen der Klemmvorrichtung (10) greifen die Rastbolzen (42) in die Rastnuten (27) der Verzahnung der Rastplatte (26) ein und fixieren so das Oberteil (30) relativ zum Unterteil (20) in der gewünschten Position. Bevorzugt befinden sich die Rastplatten (26), die den einzelnen in Höhenversatz zueinander angeordneten Rastbolzen (42) zugeordnet sind, in vertikaler Richtung gesehen auf gleicher Höhe. Bevorzugt beträgt der Höhenversatz von zwei eingebauten Rastbolzen (42) zueinander ½ der Teilung der Verzahnung der Rastplatten (26). Bei besonders bevorzugt drei eingebauten Rastbolzen (42), beträgt der Höhenversatz der Rastbolzen (42) zueinander entsprechend ⅓ der Teilung der Verzahnung der Rastplatten (26). Durch die so in Höhenversatz zueinander angeordneten Rastbolzen (42) kann eine verhältnismäßig grobe, schmutzunempfindliche Verzahnungs-Teilung für die Rastplatten (26) gewählt werden. Durch das nur abwechselnd mögliche Einschwenken der Rastbolzen (42) in die Rastnuten (27) der zugeordneten Rastplatten (26) wird dem Operator durch diesen konstruktiven Aufbau trotz der groben Verzahnung der Rastplatten (26) ein sehr feinfühliges Rastgefühl vermittelt und eine exakte Einstellmöglichkeit der Klemmvorrichtung (10) geboten. Bei Betätigung des Entriegelungsbolzens (40) wird der Rastblock (38) entgegen der Kraft einer weiteren Druckfeder (39) bewegt, wodurch die Rastbolzen (42) aus den Rastnuten (27) der Verzahnung gelöst werden und eine Bewegung des Oberteils (30) ermöglicht wird.

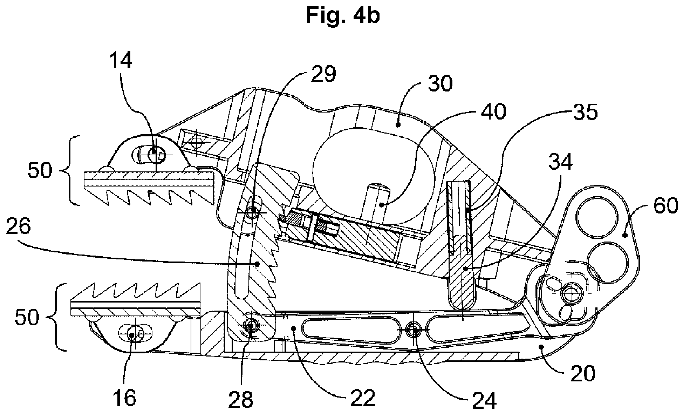

Die Darstellung der Figur 4b beleuchtet die Druckfeder (35), die einen der Druckstifte (34) vorspannt. Ihre Funktion besteht darin, das Oberteil (30) in der geöffneten Grundstellung vom Unterteil (20) wegzudrücken. Dies erleichtert das Einlegen und Entnehmen des Objekts (18) zwischen den Zahnplatten (50), da das Oberteil (30) nicht von selbst in die geschlossene Position fällt. Beim Schließen der Klemmvorrichtung (10) wird die Klemmvorrichtung (10) gegen die Federkraft (35) der Druckstifte (34) zusammengedrückt, sodass das Oberteil (30) an das Unterteil (20) herangeführt wird und die Zahnplatten (50) mit ihren Zähnen (56) ineinandergreifen können.

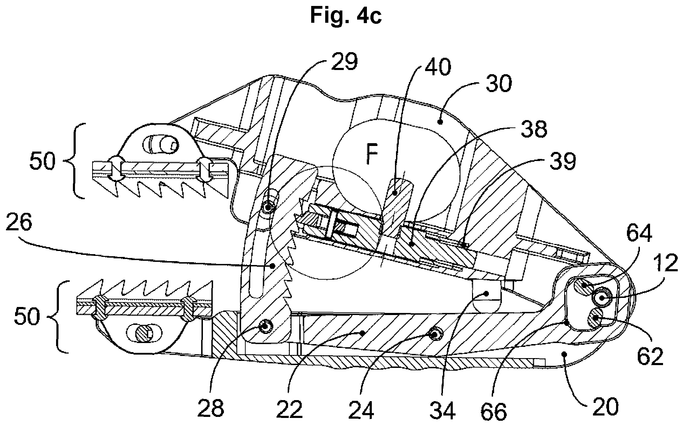

Figur 4c zeigt ferner die Boosterkulisse (66) des Übertragungshebels (22), in die ein Basisnocken (62) und ein Boosternocken (64) des Boosterhebels (60) eingreift. Die Boosterkulisse (66) ist als geschwungene Führung im Übertragungshebel (22) ausgeführt.

Bei vertikal ausgerichtetem Boosterhebel (60) ist der Basisnocken (62) ebenfalls vertikal in der Boosterkulisse (66) ausgerichtet und drückt das hintere Ende des Übertragungshebels (22) dabei in seine untere Endlage. Das vordere Ende des Übertragungshebels (22) mit der an dem vorderen Ende des Übertragungshebels (22) über einen Lagerbolzen (28) angeordneten mindestens einen Rastplatte (26) befindet sich dabei in seiner oberen Endlage. Der Boosternocken (64) ist hierbei nicht im Eingriff mit der Boosterkulisse (66). Die Klemmvorrichtung (10) befindet sich damit in ihrer Basisstellung, in der die Klemmvorrichtung (10) an ein Objekt (18) angebracht werden kann. Beim Anlegen einer Zugkraft an den vertikal ausgerichteten Boosterhebel (60) von hinten, beispielsweise über ein Zugseil, wird der Boosterhebel (60) um seine Drehachse (12) nach hinten aus seiner Vertikalen geschwenkt. Dabei gibt der am Boosterhebel (60) angebrachte Basisnocken (62) seine Wirkverbindung mit der Boosterkulisse (66) auf und gibt die Boosterkulisse (66) frei (siehe Fig. 4c). Der Boosternocken (64) kann sodann in Wirkverbindung mit der Boosterkulisse (66) treten und das hintere Ende des Übertragungshebels (22) dabei in seine obere Endlage überführen. Das vordere Ende des Übertragungshebels (22) mit der an dem vorderen Ende des Übertragungshebels (22) über einen Lagerbolzen (28) angeordneten mindestens einen Rastplatte (26) schwenkt dabei in seine untere Endlage. Das Oberteil (30), welches bereits über mindestens einen Rastbolzen (42) mit der mindestens einen Rastplatte (26) in Wirkverbindung steht, wird hierbei gegen das Unterteil (20) der Klemmvorrichtung (10) gedrückt.

Dadurch wird eine zusätzliche Klemmkraft, die sogenannte "Boost"-Kraft, auf das Objekt (18) ausgeübt. Wie Figur 5 im Detail verdeutlicht, wird der Rastbolzen (42) radial und linear von einem Absteckbolzen (45) gehalten.

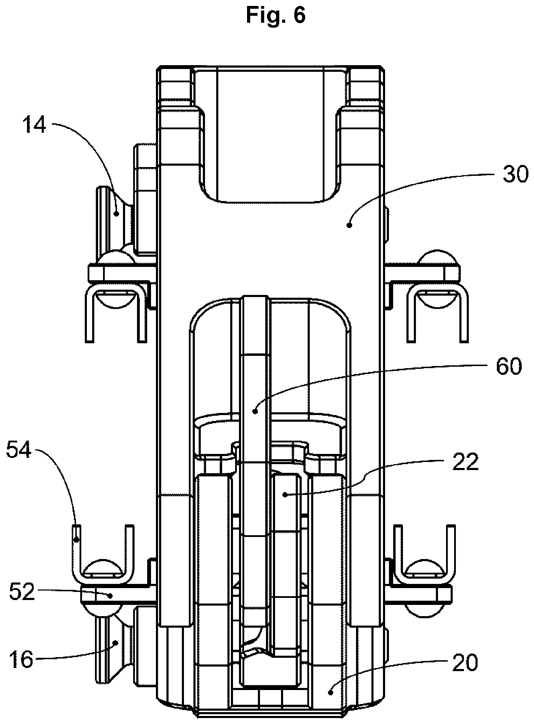

Die besonders bevorzugt auswechselbare Zahnplatte (50) ist fest, im Wesentlichen spielfrei, mit dem Unterteil (20) verbunden und kann bevorzugt vom Anwender/Operator nach Bedarf auch im Feld sehr einfach und werkzeuglos, beispielsweise durch das Herausziehen des in Figur 6 dargestellten Absteckstiftes (16), ausgetauscht werden

Dies ist besonders vorteilhaft, da abhängig von der Geometrie und der Härte des aufgefundenen Objekts (18) die am besten geeignete Zahnplatte (50) zur Aufnahme/Fixierung des Objektes (18) ausgewählt und am Unterteil (20) der Klemme (10) angebracht werden kann.

Auch kann bei einer Beschädigung von einem oder mehreren Zähnen (56) der Zahnplatte (50) und/oder bei einer Beschädigung der Zahnplatte (50) selbst die Zahnplatte (50) sehr einfach und schnell ausgetauscht werden.

Die Klemme (10) ist also sehr schnell wieder für den laufenden Einsatz bereit und kann weiterverwendet werden.

Es muss bei einer Beschädigung also nicht die gesamte Klemme (10) weggeworfen werden.

Eine zweite besonders bevorzugt auswechselbare Zahnplatte (50) ist bevorzugt quer zur Hauptebene der Klemmvorrichtung (10) schwenkbar mit dem Oberteil (30) verbunden und kann bevorzugt vom Anwender/Operator nach Bedarf auch im Feld sehr einfach und werkzeuglos, beispielsweise durch das Herausziehen des in Figur 6 dargestellten Absteckstiftes (14), ausgetauscht werden

Durch die schwenkbare Lagerung der am Oberteil (30) angebrachten Zahnplatte (50) kann sich die Zahnplatte (50) selbständig parallel zu einer Haupterstreckungsrichtung eines zu fixierenden Objektes (18) ausrichten, um dieses stets mit einer größtmöglichen Kontaktfläche aufzunehmen und zu fixieren.

Im Übrigen kann selbstverständlich die besonders bevorzugt auswechselbare Zahnplatte (50) auch am Oberteil (30) fest und nicht schwenkbar angebracht werden.

Die besonders bevorzugt auswechselbare Zahnplatte (50) kann dabei auch am Unterteil (20) schwenkbar angebracht werden.

Es sind auch weitere Varianten möglich, bei welchen am Oberteil (30) und am Unterteil (20) jeweils bevorzugt auswechselbare Zahnplatten (50) fest angebracht werden oder jeweils bevorzugt auswechselbare Zahnplatten (50) schwenkbar angebracht werden.

Im Übrigen kann auch bei allen weiteren Bauteilen der Klemme (10) bei einer festgestellten Beschädigung eines einzelnen Bauteils/einzelner Bauteile das beschädigte/die beschädigten Bauteile ausgetauscht werden.

**Liste der Bezugszeichen**

| Bezugszeichen | Kurzbeschreibung | Erläuterung |
|---|---|---|
| 10 | Klemme vollständig, Klemmvorrichtung | |
| 12 | Hauptachse, Drehachse | Bevorzugt am hinteren Ende des Unterteils und am hinteren Ende des Oberteils angeordnet |
| 14 | Absteckstift, unverlierbarer Absteckstift | Verriegelung der Zahnplatte am Oberteil |
| 16 | Absteckstift, unverlierbarer Absteckstift | Verriegelung der Zahnplatte am Unterteil |
| 18 | Objekt, Textilgewebe, Plane, Ast, Kabel, Seil, Platte | |
| 20 | Unterteil, Basisbauteil | |
| 21 | Stützzapfen unten, Stützzapfen | stützt Zahnplatte ab, Krafteinleitungspfad |
| 22 | Übertragungshebel | Übertragungshebel für mech. Booster |
| 24 | Hebelachse | Lagerung des Übertragungshebels |
| 26 | Rastplatte | radiusförmiges Rastblech |
| 27 | Rastnut | Freiraum zwischen zwei benachbarten Zähnen der Rastplatte |
| 28 | Lagerbolzen | untere Achse in den Rastplatten |
| 29 | Stützbolzen | oberer Bolzen in den Rastplatten |
| 30 | Oberteil | |
| 32 | Stützzapfen oben, Stützzapfen | stützt Zahnplatte ab, Krafteinleitungspfad |
| 34 | Druckstift | öffnet Klemme |
| 35 | Druckfeder für Druckstift, Druckfeder | |
| 38 | Rastblock | Halter für Rastbolzen |
| 39 | Druckfeder für Rastblock, Druckfeder | |
| 40 | Entriegelungsbolzen | um Rastblock nach hinten zu ziehen |
| 42 | Rastbolzen | greift in Rastplatte ein |
| 43 | Druckfeder für Rastbolzen | |
| 45 | Absteckbolzen | hält Rastbolzen, radial und linear |
| 50 | Zahnplatte, auswechselbare Zahnplatte | |
| 52 | Trägerplatte | nimmt Zahnleisten bzw. Zähne auf |
| 54 | Zahnleiste | |
| 56 | Zahn, Haltezahn, Haltemittel | |
| 60 | Boosterhebel | hier wird Karabiner mit Zugseil befestigt |
| 62 | Basisnocken | drückt Übertragungshebel hinten nach unten, Rastplatten-Paket geht in oberste Endlage, Grundstellung |
| 64 | Boosternocken | drückt Übertragungshebel hinten nach oben, mechanische Klemmkraft-Verstärkung |
| 66 | Boosterkulisse | Kurvenverlauf hinten im Übertragungshebel |

## Patentansprüche

1. Klemmvorrichtung (10) zum Halten eines Objekts (18), umfassend:
a. ein Unterteil (20) mit einer ersten Zahnplatte (50), die einen oder mehrere erste Zähne (56) aufweist;
b. ein Oberteil (30) mit einer zweiten Zahnplatte (50), die einen oder mehrere zweite Zähne (56) aufweist, wobei das Oberteil (30) relativ zum Unterteil (20) um eine Drehachse (12) schwenkbar ist;
c. mindestens eine Rastplatte (26) mit einer Verzahnung;
d. mindestens einen Rastbolzen (42), der in eine Rastnut (27) der Verzahnung der mindestens einen Rastplatte (26) eingreift, um das Oberteil (30) relativ zum Unterteil (20) in verschiedenen Schließstellungen zu fixieren.

2. Klemmvorrichtung (10) nach Anspruch 1, **dadurch gekennzeichnet, dass** die erste und die zweite Zahnplatte (50) jeweils mindestens einen Zahn (56), bevorzugt jedoch mehrere Zähne (56) aufweisen.

3. Klemmvorrichtung (10) nach Anspruch 1 bis 2, **dadurch gekennzeichnet, dass** die erste und die zweite Zahnplatte (50) jeweils mindestens eine Zahnleiste (54), bevorzugt jedoch mehrere Zahnleisten (54) mit mehreren Zähnen (56) aufweisen.

4. Klemmvorrichtung (10) nach Anspruch 1 bis 3, **dadurch gekennzeichnet, dass** die erste und/oder die zweite Zahnplatte (50) bevorzugt auswechselbar sind.

5. Klemmvorrichtung (10) nach einem der Ansprüche 1 bis 4, **dadurch gekennzeichnet, dass** die Zahnplatten (50) am Unterteil (20) bzw. Oberteil (30) durch jeweils mindestens einen Absteckstift (14, 16) fixiert sind.

6. Klemmvorrichtung (10) nach einem der Ansprüche 1 bis 5, **dadurch gekennzeichnet, dass** bevorzugt mindestens eine Zahnplatte (50) quer zur Arbeitsrichtung schwenkbar gelagert ist.

7. Klemmvorrichtung (10) nach einem der Ansprüche 1 bis 6, **dadurch gekennzeichnet, dass** das Unterteil (20) mindestens einen Stützzapfen (21) aufweist, an dem sich die erste Zahnplatte (50) abstützt.

8. Klemmvorrichtung (10) nach einem der Ansprüche 1 bis 7, **dadurch gekennzeichnet, dass** das Oberteil (30) mindestens einen Stützzapfen (32) aufweist, an dem sich die zweite Zahnplatte (50) abstützt.

9. Klemmvorrichtung (10) nach einem der Ansprüche 1 bis 8, **dadurch gekennzeichnet, dass** die zweite Zahnplatte (50) relativ zur ersten Zahnplatte (50) um 180° um die Längsachse der Klemmvorrichtung (10) geschwenkt angeordnet ist.

10. Klemmvorrichtung (10) nach einem der Ansprüche 1 bis 9, **dadurch gekennzeichnet, dass** die zweite Zahnplatte (50) relativ zur ersten Zahnplatte (50) in der Hauptebene der Klemmvorrichtung (10) versetzt angeordnet ist, sodass die Zähne (56) der zweiten Zahnplatte (50) in Freiräume zwischen den Zähnen (56) der ersten Zahnplatte (50) eingreifen.

11. Klemmvorrichtung (10) nach einem der Ansprüche 1 bis 10, **dadurch gekennzeichnet, dass** ein Rastblock (38) im Oberteil (30) aufgenommen ist und durch die Druckfeder (39) federbelastet ist.

12. Klemmvorrichtung (10) nach Anspruch 11, **dadurch gekennzeichnet, dass** der Rastblock (38) mehrere, in der Höhe versetzte Rastbolzen (42) aufweist, die jeweils nacheinander in eine Rastnut (27) in einer zugeordneten Rastplatte (26) eingreifen.

13. Klemmvorrichtung (10) nach Anspruch 12, **dadurch gekennzeichnet, dass** die Rastbolzen (42) federbelastet (43) sind und durch einen Absteckbolzen (45) radial und linear fixiert sind.

14. Klemmvorrichtung (10) nach einem der Ansprüche 1 bis 13, **dadurch gekennzeichnet, dass** die Klemmvorrichtung (10) in der Grundstellung federbelastet in geöffneter Position gehalten wird.

15. Klemmvorrichtung (10) nach einem der Ansprüche 1 bis 14, **dadurch gekennzeichnet, dass** ein Boosterhebel (60) über einen Übertragungshebel (22) mit mindestens einer Rastplatte (26) gekoppelt ist und bei Betätigung eine zusätzliche Klemmkraft auf das Objekt (18) ausübt.

16. Klemmvorrichtung (10) nach Anspruch 15, **dadurch gekennzeichnet, dass** der Übertragungshebel (22) um eine Hebelachse (24) schwenkbar gelagert ist und eine Boosterkulisse (66) aufweist, in die ein Basisnocken (62) und ein Boosternocken (64) des Boosterhebels (60) eingreifen.

17. Klemmvorrichtung (10) nach einem der Ansprüche 1 bis 16, **dadurch gekennzeichnet, dass** die Klemmvorrichtung (10) einen Entriegelungsbolzen (40) aufweist, mit dem der Rastblock (38) entgegen der Federkraft (39) bewegbar ist, um die Rastbolzen (42) aus der Verzahnung der mindestens einen Rastplatte (26) zu lösen.

18. Klemmvorrichtung (10) nach einem der Ansprüche 1 bis 17, **dadurch gekennzeichnet, dass** die Klemmkraft am Objekt (18) automatisch proportional zur anliegenden Zugkraft exponentiell erhöht wird, unabhängig von der eingenommenen Schließstellung der Klemmvorrichtung (10).

## Geänderte Patentansprüche

### Geänderte Patentansprüche gemäss Regel 137(2) EPÜ.

1. Klemmvorrichtung (10) zum Halten eines Objekts (18), umfassend:
a. ein Unterteil (20) mit einer ersten Zahnplatte (50), die einen oder mehrere erste Zähne (56) aufweist;
b. ein Oberteil (30) mit einer zweiten Zahnplatte (50), die einen oder mehrere zweite Zähne (56) aufweist, wobei das Oberteil (30) relativ zum Unterteil (20) um eine Drehachse (12) schwenkbar ist;
c. mindestens eine Rastplatte (26) mit einer Verzahnung;
**gekennzeichnet durch**
d. mindestens einen Rastbolzen (42), der in eine Rastnut (27) der Verzahnung der mindestens einen Rastplatte (26) eingreift, um das Oberteil (30) relativ zum Unterteil (20) in verschiedenen Schließstellungen zu fixieren, und
e. einen Rastblock (38), der im Oberteil (30) aufgenommen und durch eine Druckfeder (39) federbelastet ist und mehrere in der Höhe versetzte Rastbolzen (42) aufweist, die jeweils nacheinander in eine Rastnut (27) in einer zugeordneten Rastplatte (26) eingreifen.

2. Klemmvorrichtung (10) nach Anspruch 1, **dadurch gekennzeichnet, dass** die erste und die zweite Zahnplatte (50) jeweils mindestens einen Zahn (56), bevorzugt jedoch mehrere Zähne (56) aufweisen.

3. Klemmvorrichtung (10) nach Anspruch 1 bis 2, **dadurch gekennzeichnet, dass** die erste und die zweite Zahnplatte (50) jeweils mindestens eine Zahnleiste (54), bevorzugt jedoch mehrere Zahnleisten (54) mit mehreren Zähnen (56) aufweisen.

4. Klemmvorrichtung (10) nach Anspruch 1 bis 3, **dadurch gekennzeichnet, dass** die erste und/oder die zweite Zahnplatte (50) auswechselbar sind.

5. Klemmvorrichtung (10) nach einem der Ansprüche 1 bis 4, **dadurch gekennzeichnet, dass** die Zahnplatten (50) am Unterteil (20) bzw. Oberteil (30) durch jeweils mindestens einen Absteckstift (14, 16) fixiert sind.

6. Klemmvorrichtung (10) nach einem der Ansprüche 1 bis 5, **dadurch gekennzeichnet, dass** bevorzugt mindestens eine Zahnplatte (50) quer zur Arbeitsrichtung schwenkbar gelagert ist.

7. Klemmvorrichtung (10) nach einem der Ansprüche 1 bis 6, **dadurch gekennzeichnet, dass** das Unterteil (20) mindestens einen Stützzapfen (21) aufweist, an dem sich die erste Zahnplatte (50) abstützt.

8. Klemmvorrichtung (10) nach einem der Ansprüche 1 bis 7, **dadurch gekennzeichnet, dass** das Oberteil (30) mindestens einen Stützzapfen (32) aufweist, an dem sich die zweite Zahnplatte (50) abstützt.

9. Klemmvorrichtung (10) nach einem der Ansprüche 1 bis 8, **dadurch gekennzeichnet, dass** die zweite Zahnplatte (50) relativ zur ersten Zahnplatte (50) um 180° um die Längsachse der Klemmvorrichtung (10) geschwenkt angeordnet ist.

10. Klemmvorrichtung (10) nach einem der Ansprüche 1 bis 9, **dadurch gekennzeichnet, dass** die zweite Zahnplatte (50) relativ zur ersten Zahnplatte (50) in der Hauptebene der Klemmvorrichtung (10) versetzt angeordnet ist, sodass die Zähne (56) der zweiten Zahnplatte (50) in Freiräume zwischen den Zähnen (56) der ersten Zahnplatte (50) eingreifen.

11. Klemmvorrichtung (10) nach einem der Ansprüche 1 bis 10, **dadurch gekennzeichnet, dass** die Rastbolzen (42) federbelastet (43) sind und durch einen Absteckbolzen (45) radial und linear fixiert sind.

12. Klemmvorrichtung (10) nach einem der Ansprüche 1 bis 11, **dadurch gekennzeichnet, dass** die Klemmvorrichtung (10) in der Grundstellung federbelastet in geöffneter Position gehalten wird.

13. Klemmvorrichtung (10) nach einem der Ansprüche 1 bis 12, **dadurch gekennzeichnet, dass** ein Boosterhebel (60) über einen Übertragungshebel (22) mit mindestens einer Rastplatte (26) gekoppelt ist und bei Betätigung eine zusätzliche Klemmkraft auf das Objekt (18) ausübt.

14. Klemmvorrichtung (10) nach Anspruch 13, **dadurch gekennzeichnet, dass** der Übertragungshebel (22) um eine Hebelachse (24) schwenkbar gelagert ist und eine Boosterkulisse (66) aufweist, in die ein Basisnocken (62) und ein Boosternocken (64) des Boosterhebels (60) eingreifen.

15. Klemmvorrichtung (10) nach einem der Ansprüche 1 bis 14, **dadurch gekennzeichnet, dass** die Klemmvorrichtung (10) einen Entriegelungsbolzen (40) aufweist, mit dem der Rastblock (38) entgegen der Federkraft (39) bewegbar ist, um die Rastbolzen (42) aus der Verzahnung der mindestens einen Rastplatte (26) zu lösen.
